(19) **Europäisches Patentamt**

**European Patent Office**

**Office européen des brevets**

(11) Publication number: **0 316 972 B1**

(12) **EUROPEAN PATENT SPECIFICATION**

(45) Date of publication of patent specification: **04.08.93**  (51) Int. Cl.⁵: **G06F 3/033**, G06K 11/08

(21) Application number: **88201782.5**

(22) Date of filing: **13.05.85**

(60) Publication number of the earlier application in accordance with Art.76 EPC: **0 182 904**

(54) **Precision display position designation system using coarse touch panel input.**

(30) Priority: **18.05.84 US 612006**

(43) Date of publication of application:
**24.05.89 Bulletin 89/21**

(45) Publication of the grant of the patent:
**04.08.93 Bulletin 93/31**

(84) Designated Contracting States:
**BE CH DE FR GB IT LI NL SE**

(56) References cited:
**EP-A- 0 083 395**
**FR-A- 2 080 100**
**US-A- 4 122 438**
**US-A- 4 277 783**
**US-A- 4 313 109**

(73) Proprietor: **Hughes Aircraft Company
7200 Hughes Terrace P.O. Box 45066
Los Angeles, California 90045-0066(US)**

(72) Inventor: **Beining, August H.
818 North Adlena Drive
Fullerton CA 92633(US)**

(74) Representative: **Colgan, Stephen James et al
CARPMAELS & RANSFORD 43 Bloomsbury
Square
London WC1A 2RA (GB)**

Rank Xerox (UK) Business Services
(3.10/3.6/3.3.1)

EP 0 316 972 B1

## Description

BACKGROUND OF THE INVENTION

This invention relates to touch panel systems.

It has previously been proposed to provide an interruptable array of light beams extending across a faceplate to designate display positions. Typical patents which show this type of system include U.S. Patent No. 3,764,813, granted October 9, 1973, U.S. Patent No. 3,775, 560, granted November 27, 1973 and U.S. Patent No. 4,198,623 granted April 15, 1980. In using such systems it is most convenient to use the finger or pointer to designate the desired display position with a display marker such as a video position designation marker, or cursor, which may for example be an X in a circle or the like. The finite thickness of a finger, however, and coarse accuracy of the touch detection unit resulting from the spacing of the light beams, may mean that the video position designation marker is not positioned sufficiently accurately for some purposes.

EP-A-0083395 describes a system in which a history of recent stylus position data is used to determine the appropriate precise co-ordinate position of a cursor when several possible positions are sensed.

A problem which can interfere with the proper operation of touch panel displays is that of initial and termination transients. Thus, for example, touch initiation dynamics such as angled entry or a fly or other insect or a piece of clothing might partially interrupt one of the light beams, and this could provide a false location of the cursor. Similarly, at the end of the act of marking of the desired video position on the display through the use of a person's finger, the finger might be withdrawn at an angle, and if this terminating transient carries over into the positioning of the video designation marker, or cursor, an error could be introduced.

Accordingly, an object of the present invention is to avoid position errors which might be introduced by transients, often at the beginning or the end of marking a point on the display, or by inputs from the touch detection device such as random interruption of the light beams for an instant.

It is further an object of the present invention to precisely locate a display marker such as a video position designation marker, or cursor, despite the use of a relatively coarse touch panel detection input.

SUMMARY OF THE INVENTION

The present invention is defined in the appended claims.

In accordance with one aspect of the invention, the new position for the video position designation marker is determined not only by the location of a pointer indicating a spot on the display screen, but also by a velocity correction function (which may include an acceleration factor) involving the direction and magnitude of the shift in position of the pointer between successive intervals of time. The invention to be described can be used with other types of displays such as arrays of lights, liquid crystal, plasma panel, arrays of lighted switches.

In accordance with another aspect of the invention, input transients or momentary interruptions of the light beams, are eliminated by electronic circuitry which delays shifting the position of the video designation marker until a predetermined plurality of scans indicates positive and steady interruption of the beams. Also, when the pointer is removed from the touch panel, instead of following to the last observed location of the pointer to position the cursor, which might be an erroneous path taken as the finger is lifted from the touch input device, the system selects a display position for the cursor based on a scan dating back from the final scan in which the touch input device was active.

Viewed from another aspect, the invention involves precision cursor position from coarse input data by position determinations extending over several scan intervals, and avoidance of the introduction of false data at the transitions between the steady interrupted beam conditions and the uninterrupted beam state.

It is also noted that the present invention is applicable to other types of fine and relatively coarse touch panel input devices, involving crossed wire or other switch elements or capacitive pads, as well as to light beam interrupting touch pad input circuits. Further, the input touch panel faceplate need not overlie the display screen but could, for example, be separately located, as long as the operator can see the movement of the cursor on the display resulting from the operator's positioning a pointer such as a finger.

Advantages of the new system include the capability of very accurate display position designations despite the availability of only relatively coarse position data as indicated by the location of a finger on the surface of the faceplate of the touch input device. In addition, false indications are avoided and accurate final positioning of the video designation marker is possible, even when the finger is inserted or removed at an acute angle relative to the faceplate. In addition, the need for precisely aligning the touch panel with the display is eliminated, and parallex problems or errors are also eliminated.

Another useful feature is the capability of "jumping" the cursor to a new position on the display upon initial touch activation by the pointer thereby eliminating the need to locate the cursor prior to designating a new position on the display and consequently increasing the speed of operator input.

Other objects, features, and advantages of the invention will become apparent from a consideration of the following detailed description and from the accompanying drawings.

BRIEF DESCRIPTION OF THE DRAWINGS

FIG. 1 shows a display and touch panel electronic unit, of a type to which the present invention is applicable;

FIG. 2 is a schematic block diagram of a display and touch panel system;

FIG. 3 is a cross-sectional view through a cathode ray tube and a display enclosure indicating the physical configuration of a touch panel light beam system;

FIG. 4 indicates how information is entered into the touch panel array through the use of a person's index finger touching the faceplate and interrupting an array of light beams;

FIG. 5 is a schematic diagram showing a switching system for energizing or scanning the light beam paths which extend across the faceplate of a display;

FIG. 6 is a block diagram indicating one type of microprocessor arrangement which may be employed to implement the present invention;

FIG. 7 is a block diagram indicating one type of hardware which may be employed to implement the invention;

FIG. 8 is a sequence diagram showing transient suppression techniques; and

FIG. 9 shows a sequence diagram for providing smooth cursor precision positioning data from relatively coarse input information from the touch panel.

DETAILED DESCRIPTION OF THE INVENTION

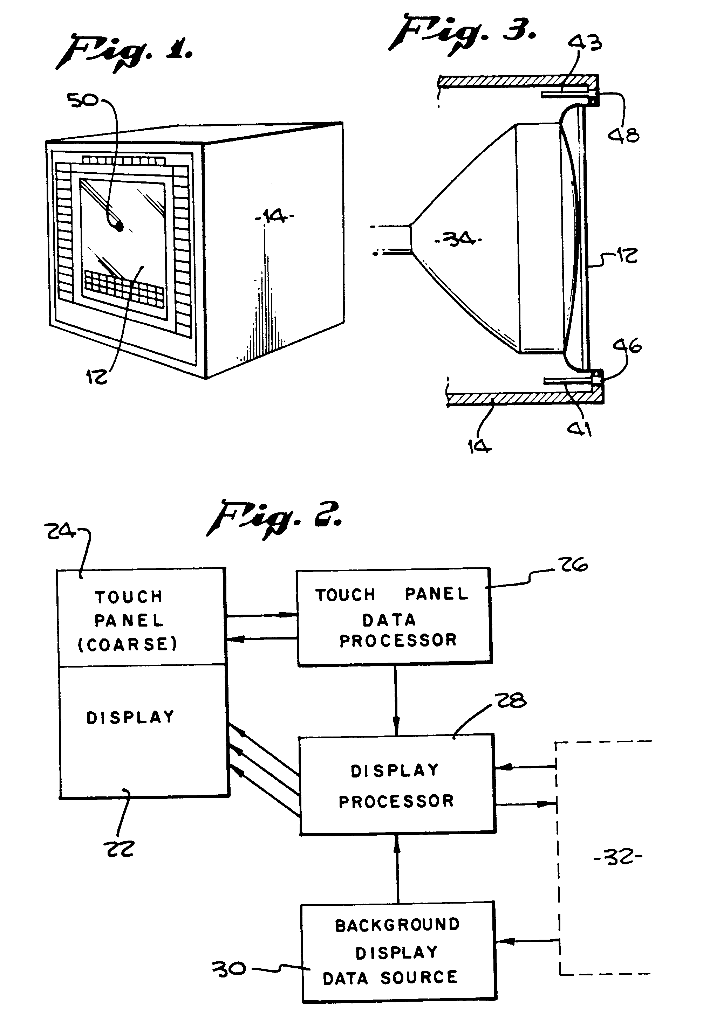

Referring more particularly to the drawings, FIG. 1 shows a display 12 mounted in a housing 14, for the electronic system. Across the front of the display 12 is a faceplate, and beams of light are directed over the surface of this faceplate both horizontally and vertically, so that the coordinate location of a finger may be readily and consistently determined based on the interruption of the light beams.

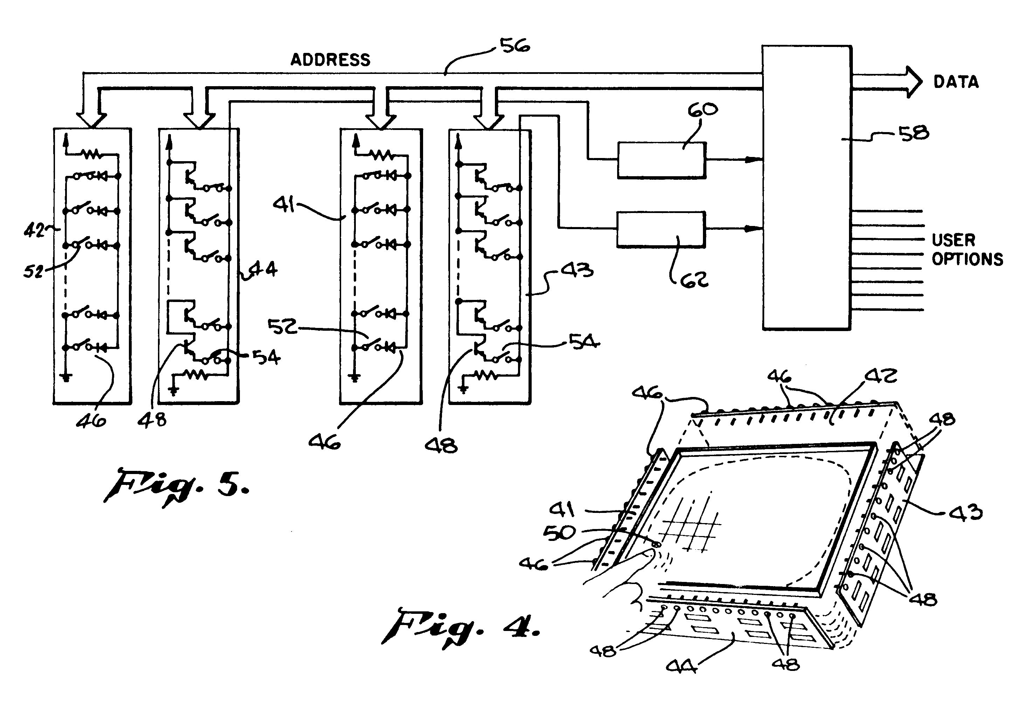

FIG. 2 is a schematic block circuit diagram illustrating the principles of the invention on a broad level. More specifically, a display 22 is provided with an associated touch panel 24 which is only capable of providing relatively coarse positional information relative to the size of a picture element of the video display 22 as will be explained in more detail with reference to the other FIGs. The touch panel data processor 26 determines the location of a pointer such as a person's finger on the touch panel 24 as a result yclic scanning of the phototransistors and the light emitting diodes which make up the touch panel 24, and a sensing of the timed outputs from each of the phototransistors. Information as to the location of the person's finger on the touch panel is supplied from the touch panel data processor 26 to the display processor 28. Background display information is supplied from circuitry 30 to the display processor 28 to provide the desired background information such as a map, keyboard or the like upon which the video position designation marker is superimposed. An electronic system 32 is indicated schematically in FIG. 2, with interconnections between the display processor 28 and the background display data source 30, because the touch panel and display system is often connected to a larger electronic system, which may one be of a large number of types of systems.

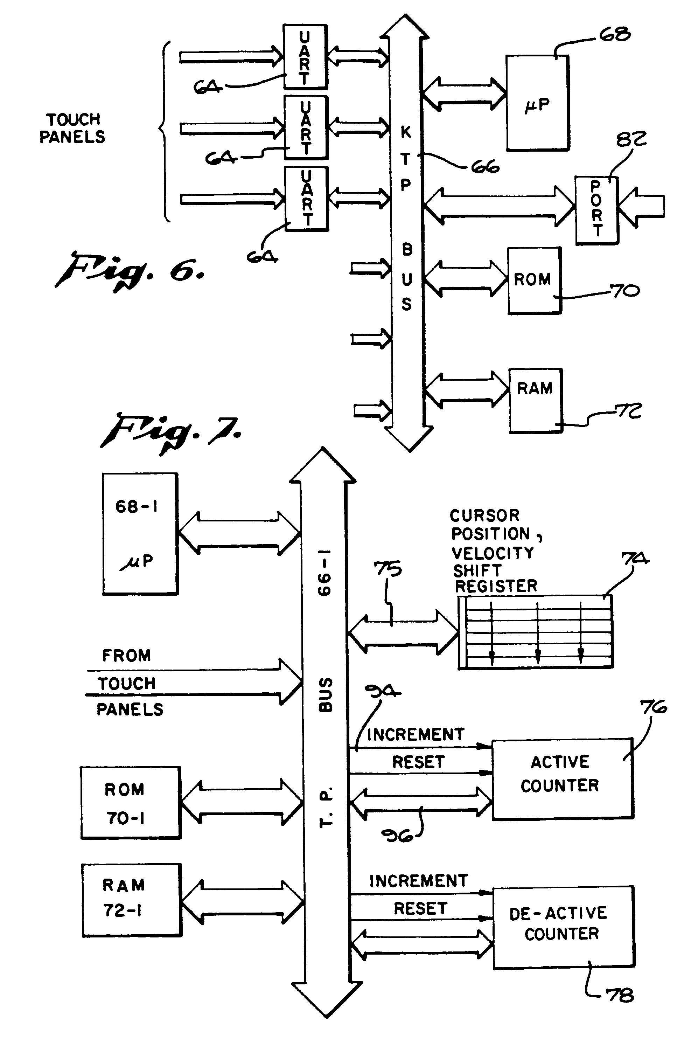

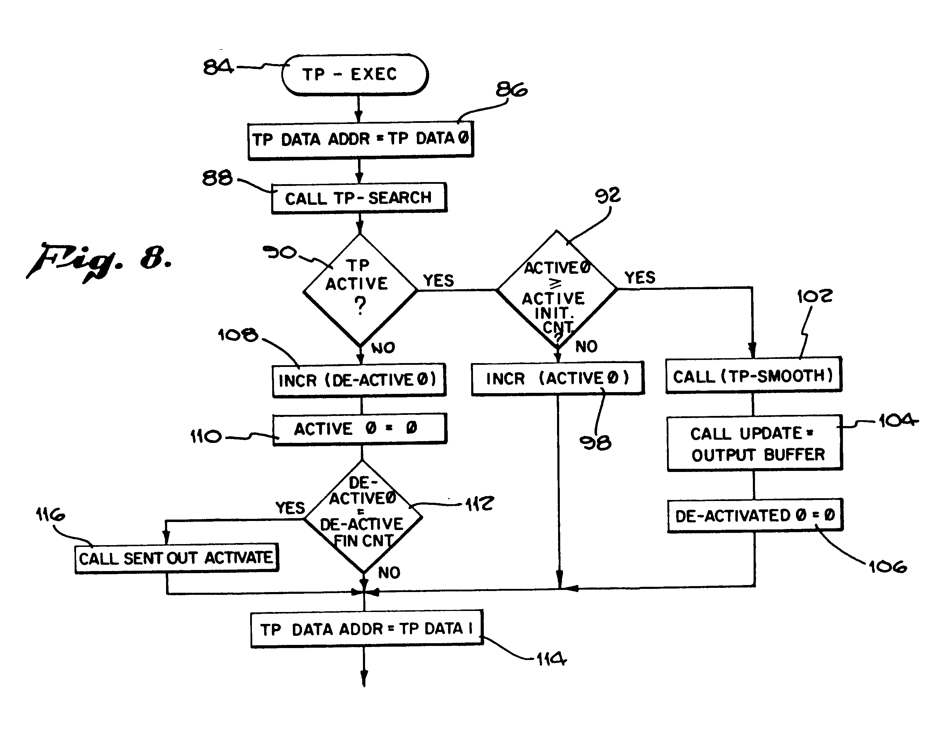

FIG. 3 is a partial cross-sectional view which may be taken through the faceplate 12 and the housing 14 in a plane perpendicular to the faceplate 12 and extending along a horizontal line through the faceplate 12. In FIG. 3 a cathode ray tube 34 has its display surface close to the faceplate 12. As shown in FIGS. 3 and 4, a set of printed circuit boards 41 through 44 are located in the proximity of the front of the cathode ray tube 34 and the faceplate 12. Each of these printed circuit boards are provided with either photo-emitters such as light emitting diodes 46, or photodetectors such as phototransistors 48. The light emitting diodes 46 provide beams of light such as infrared extending across in close proximity to the faceplate 12. Individual light beams extend from one light emitting diode 46 on one edge of the faceplate to a paired phototransistor 48 on the other edge of the faceplate. Switching circuits enable successive pairs of light emitting diodes 46 and phototransistors 48 sequentially, and the output from each phototransistor 48 is sequentially sampled. When no output is received from a particular phototransistor 48 during the sampling period, this indicates that the light beam has been interrupted. The particular pair of light emitting diode 46 and phototransistor 48 may be identified by the sample timing of the enabling switching circuit as the scan sequentially proceeds across the faceplate. This may be accomplished either simultaneously or sequentially both relative to the horizontally extending beams of infrared light and with regard to the vertically extending beams of light. By locating the coordinate location of the finger touching the faceplate, both horizontally and vertically, through circuitry included in the touch panel data processor 26 (FIG. 2), suitable signals may be supplied to the display processor 28, and a display designation position marker, or cursor, may be positioned on the display by the display processor 28. This could be in the form of a symbol such as a circle with an X across it positioned in full view just above the pointer, for example, as shown at reference numeral 50 in FIG. 1 and FIG. 4.

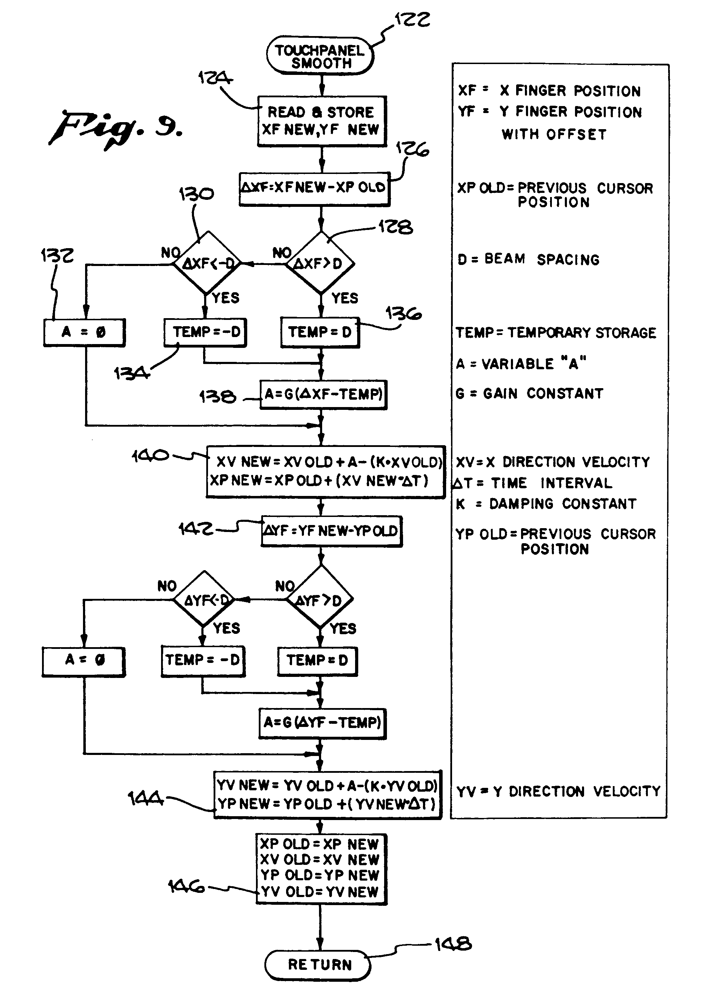

FIG. 5 shows schematically the technique for scanning the light beams, or the pairs of light emitting diodes 46 and phototransistors 48 which are employed in the light beam scanning arrangements. More specifically, each light emitting diode 46 has an enabling switch 52 associated with it, and each phototransistor 48 has an enabling switch 54 connected to it. An address bus 56 extends from a signal processing circuit illustrated generally as a microprocessor 58 to the circuit boards 41 through 44. It should of course be understood that a microprocessor 58 may not be used as such in lieu of counting logic and that it is illustrated for ease of understanding the operation of the circuit of FIG. 5. The switches 52 and 54 are, of course, semiconductor switches and are energized sequentially according to the addresses supplied on the bus 56. Pairs of semiconductor switches 52 and 54 associated with a single beam of light, have the same address, so they are enabled simultaneously, while none of the other LED switches or phototransistor switches are turned on during this interval for sequential operation. Scanning of the two emitter-detector arrays is accomplished by the application of a series of addresses on bus 56. In practice, a complete cycle of scanning is accomplished approximately 30 times a second. The address information supplied on bus 56 is correlated with the output signal information from the detector array indicating a pulse or no-pulse, from the common horizontal output pulse processor and amplifier circuit 60 and from the corresponding vertical output pulse processor and amplifier circuit 62. The output pulse circuits 60 and 62 can be combined for sequential operation and can be the same as those disclosed in U.S. Patent Application Serial No. 06/512,821 filed on July 11, 1983 by B. M. Komadina, V. D. Lazarevich and A. H. Beining.

FIG. 6 is a block diagram which shows one arrangement for implementing touch panel data processor 26 functions described herein (a microprocessor implementation). Alternatively a hard wired logic could be used. In the FIG. 6 approach information from several touch panels may be supplied via the buffer circuits 64 to the KTP BUS 66 associated with the microprocessor 68. Incidentally, the designation "KTP" stands for Keyboard and Touch Panel because keyboard inputs (from a keyboard which is not shown) may also be supplied to the bus 66 along with the information from the touch panels. The letters "UART" which appear on the buffers 64, stand for Universal Asynchronous Receiver Transmitters, and facilitate the handling of serial bytes of digital information. The BUS 66 can be implemented as eight or sixteen parallel wires. The microprocessor 68 that has been used is an Intel 8610 16-Bit H-MOS Microprocessor as described in the "Microprocessor and Peripheral Handbook", copyrighted in 1983 by Intel Corporation. One type of UART buffer 64 that has been used as the Intel 8251A Programmable Communication Interface Universal Synchronous/Asynchronous Receiver/Transmitter described in the "Microprocessor and Peripheral Handbook" copyrighted in 1983 by Intel Corporation.

Suitable memory indicated by ROM 70 are provided to control the data processing sequences, and adequate random access memory or RAM 72 is also provided. One ROM memory 70 that has been used is the Intel 2716 16K "2K by 8" U. V. Erasable PROM described in Memory Component Handbook copyrighted in 1983 by Intel Corporation. One RAM memory 72 that has been used is the Intel 2186 "8192 by 8 bit Integrated RAM" also described in the Intel Memory Component Handbook.

The showing of FIG. 7 is somewhat more detailed than that of FIG. 6 and indicates schematically the mode of operation of certain circuit components which are shown as possibly being hardwired, including a data shift register 74, an active counter 76 and a "de-active" counter 78. A shift register 74 which has been used is a Texas Instruments TI 5ULS165 Parallel Load 8-Bit Shift Register with Complimentary Outputs described in the Memory Components Handbook copyrighted in 1981 by Texas Instruments Company. The active counter 76 used is a Texas Instruments TI 5ULS163 Asynchronous 4-Bit Counter described in the Texas Instrument Memory Components Handbook. The deactive counter 76 can also be a TI 5ULS163 Asynchronous 4-Bit Counter. The microprocessor 68-1 and bus 66-1 are also shown in FIG. 7. FIG. 7 will be discussed in greater detail in connection with the sequence diagrams of FIGS. 8 and 9. Of course, the sequence diagram of FIGS. 8 and 9 can also be implemented in a computer program using the Intel APM-86 Assembly Language described in the 8086/8087/8088 Macro Assembly Language Reference Manual copyrighted in 1980 by Intel Corporation.

FIG. 8 is a sequence diagram indicating the steps which are taken by the microprocessor 68 under the control of the read-only memory 70, and other instructions which may be provided by the host system through the input/output port 82 (see FIG. 6). The input/output port 82 can be the Intel 8155H 2048 Bit Static HMOS RAM, described in the Intel Memory Components Handbook. The sequence of operations shown in FIG. 8 is known as the touch panel executive sequence (TP-EXEC) and its start is indicated by the block 84.

The first step in the sequence is to select touch panel data TP-DATA ADDR from any one of the buffer circuits 64 as shown in FIG. 6. This step is indicated by the block 86 indicating that data from touch panel "∅" is to be selected, and of course, the output information is to be supplied back to the display unit associated with touch panel "∅". The next step in the sequence is to initiate a review of touch panel "∅" and determine the status of inputs to the touch panel to see if anyone has applied a finger or a pointer to the faceplate 12 of the display. This initiation of the search CALL TP-SEARCH is indicated by block 88.

Following step 88, the next step in the sequence is to determine whether any of the light beams which extend across the faceplate are interrupted. This is indicated in FIG. 8 by the question touch panel active (TP ACTIVE) diamond 90. If some of the beams are interrupted, the touch panel is active, the answer is "YES" and we proceed to the question indicated by the diamond 92 which asks whether touch panel "∅" has been active during several successive scans or whether the number of times which it has been active is equal to or greater than a predetermined "active initial count"-ACTIVE ∅ ≧ ACTIVE INIT. CNT. The reason for this step is to avoid transient operation of the system if, for example, an insect or other object happens to interrupt the beams and give a transitory isolated interruption of one of the light beams. Thus, the "active" counter 76 (FIG. 7) may be incremented by pulses applied on lead 94 indicating that at least one of the beams has been interrupted during a particular scan cycle. The output from the active counter 76 may be held in an output buffer within the counter and may be sensed or read over the bus 96.

Accordingly, if the touch panel has not been active for at least the predetermined number of scans the answer to the question indicated in diamond 92 is "NO" whereupon the active counter 76 would be incremented INCR (ACTIVE ∅), as indicated by the block 98. In practice in the normal microprocessor, instead of a separate hardwired active counter as indicated by the block 76, the same function is accomplished through the use of a random access memory such as RAM 72 as shown in FIG. 6, and during successive scans, the number stored in a particular address in the RAM 72 is withdrawn from memory incremented to the next higher number and inserted back into a selected random access memory location. This is normally all accomplished under the control of the program sequences in the read-only memory 70. Of course, other memory could be used such as RAM 72 or other memories such as programable read only memories (PROMS) and erasable PROMS EPROMS.

However, if the touch panel has been active for at least the predetermined number of scans the answer to the activity inquiry indicated by diamond 92 is "YES", and then the sequence steps 102, 104 and 106 are followed. Block 102 indicates that the series of steps are the sequence of operation as set forth in FIG. 9 will be called into play. More specifically, this involves the smoothing routine CALL (TP-SMOOTH) whereby the video position designation marker, or cursor 50, may be positioned with much greater precision than the detectable accuracy of the detected location of a finger on the faceplate of the touch panel. This will be described in some detail in connection with FIG. 9.

Sequence step 104 is "CALL UPDATE = OUTPUT BUFFER", and this means that the new position data for the cursor 50 derived in accordance with the sequence of FIG. 9 is supplied from the touch panel data processor 26 to be employed by the display processor 28 to locate the video position designation marker, or cursor 50, on the display video screen.

Step 106 of FIG. 8 indicates that the DE-ACTIVE ∅ counter 78 of FIG. 7 is reset to 0. The de-active counter 78 is employed at the time that the user lifts his finger off the faceplate 12, and this counter 78 is reset to 0 at the time when the touch panel has been active for several successive scans.

Now, returning to the TP-ACTIVE diamond 90, if the touch panel is not active, and no beams are interrupted, we proceed along the branching path extending vertically down from diamond 90 to block 108 which indicates that the de-active counter 78 is to be incremented INCR (DE-ACTIVE ∅). The next step 110 indicates that the active counter 76 is to be reset to 0 ACTIVE ∅ = ∅. The diamond 112 asks the question as to whether the de-active counter 78 has reached its final count DE-ACTIVE ∅ = DE-ACTIVE FINAL COUNT. In the present case where the scans occur approximately 30 times per second, the full count for the de-active counter 78 might be set to "3" so that, after approximately one-tenth of a second of no beams having been interrupted, we could conclude that a person's finger has been positively withdrawn from the faceplate. If the answer to the question posed by diamond 112 is "NO", then we proceed to block 114 indicating that the same procedure will be followed for touch panel 1, a second touch panel addressed in the system TP DATA ADDRESS = TP DATA 1.

However, if the de-active counter 78 has reached its final count (for example, 3), then the answer is "YES" and we proceed to sequence step 116 designated "CALL SENT OUT ACTIVATE". This means that position data is selected from several steps back, on the basis that, as the person removed his finger from the faceplate, he may have done so at an angle and might have produced an undesired and erroneous input position data to the video display. Accordingly, by going back several steps prior to the first scan when the beams were not interrupted, an accurate pre-transient position may be determined.

Now, turning to FIG. 9, this sequence diagram relates to the obtaining of smooth and precise input data for positioning the video position designation marker or cursor from relatively coarse information provided by the touch panel. More specifically, in this regard, the successive beams might characteristically be spaced apart by a distance "D" which is one-tenth of an inch or 0.15 inch, while the position marker on the video screen may be located to an accuracy of one picture element which is in the order of about ten one-thousandth (0.010) of an inch. From an overall basis, and as developed in detail hereinbelow, the sequence of FIG. 9 will give the increased accuracy by combining location data of the finger and position data of the cursors from successive scans with velocity and acceleration corrections based on the movement and the rate of movement of the finger from one scan to the next. This additional information will permit very precise positioning of the cursor 50.

For example, when a cursor 50 is at a position $YP_{OLD}$ on the display and it is desired to move the cursor 50 to a new position $YP_{NEW}$, the finger placed on the touch panel faceplate 12 operates to designate the new position of the cursor 50. In the illustrated embodiment (FIG. 4), the vertical coordinate with the finger $YF_{NEW}$ is off-set below the desired new vertical coordinate $YP_{NEW}$ of the cursor so that the finger does not block the view of the cursor 50 while positioning it to the new position $YP_{NEW}$.

Now, returning to FIG. 9, the uppermost block 122 in this figure of the drawings is designated "TOUCH PANEL SMOOTH", indicating that the sequence of FIG. 9 is directed to providing smoothed location data as determined from the relatively coarse position input information provided from successive scans of the light beams across the faceplate. The second block 124 indicates that the new position, "F" of the finger both in the horizontal or "X" direction and in the vertical or "Y" direction is read and stored -READ & STORE

$XF_{NEW}$, $YF_{NEW}$. Also, if this sequence is the first after a new active, $XP_{OLD}$ is set to $XF_{NEW}$, $YP_{OLD}$ is set to $YF_{NEW}$, XV (X-velocity) is set to zero, and YV (Y velocity) is set to zero to cause the cursor 50 to establish or "jump to" the new initial position. The next step as indicated by block 126 is to calculate the difference $\Delta XF$ between the new finger location $XF_{NEW}$ and the previous position of the cursor $XP_{OLD}$ or the video position designation marker 50. In accordance with diamond 128, the next step is to determine whether the change in location of the pointer $\Delta XF$ is greater than the diodes spacing distance, "D", which as mentioned above, may be greater than one-tenth of an inch or approximately 0.15 inch. Incidentally, the block 128 relates to positive values for the change $\Delta XF$ in the X position. Similarly, the block 130 indicates a determination as to whether the change in pointer location $\Delta XF$ in the negative direction is less than the spacing -D. Now, in considering the results of the examination of the outputs from diamonds 128 and 130, if the change is less than plus or minus D, the output signal is NO and we reach block 132, which indicates that, for the purposes of subsequent calculations, the variable "A" will be selected as 0. On the other hand, if the output signal is YES and we reach blocks 134 or 136, it means that the shift in position in the X direction had an absolute value which was more than the light beam spacing, and accordingly, the factor designated "TEMP" which is in TEMPORARY STORAGE and is employed in the formula in block 138 is taken as plus or minus D. The calculation as indicated in block 138 is then accomplished, and the factor A as designated in block 132, or as calculated in block 138 is employed in calculating the velocity XV for moving the cursor based upon movement of the finger between successive scans, and the new position $XP_{NEW}$ of the cursor 50.

It may be particularly noted from the two formulae in block 140 that the new cursor position $P_{NEW}$ is determined by using the old cursor position $P_{OLD}$, and then multiplying the velocity $V_{NEW}$ times the interval between scans $\Delta T$ in accordance with the following generalized relationship which holds true for both the X and the Y coordinates:

$$P_{NEW} = P_{OLD} + (V_{NEW} \cdot \Delta T)$$

where:
   $P_{NEW}$ is the precise new position of the cursor;
   $P_{OLD}$ is the precise old position of the cursor; determined from the prior scan;
   $V_{NEW}$ is the new velocity;
   $\Delta T$ is the time interval between scans; where
   $V_{NEW}$ is a new velocity function derived from the old and the new cursor positions, the old and new pointer locations, and their coordinate and relative positions, locations, velocities, and accelerations modulated by geometrical values of damping factor K and gain factor G based upon the size and positional accuracy of the display and the touch panel input.

This is, of course, the well-known formula that distance is equal to velocity times time. However, the present development is believed to be unique in recognizing that very fine positioning of a cursor is possible while maintaining positional correlation with the pointer from coarse input data, using position, and velocity and/or acceleration corrections to position the cursor as set forth, for example, in FIG. 9.

The next section of the sequence diagram of FIG. 9, extending from block 142 through block 144, indicates a calculation for the Y direction which is substantially the same as that discussed hereinabove in connection with blocks 126 through 140 relating to the X direction position and velocity changes. Block 146, toward the bottom of FIG. 9, indicates the storage of the new values for the position and velocity ($XP_{NEW}$, $YP_{NEW}$) ($XV_{NEW}$, $YV_{NEW}$) in both the X or horizontal direction and the Y or vertical direction. In addition, the block 146 indicates the utilization of the new position data to reposition the cursor 50. The final block 148 in FIG. 9 indicates a return to the main sequence of FIG. 8 which is indicated by block 104 in the sequence diagram of FIG. 8.

Summarized in examples from the viewpoint of a person using the touch panel, the results of accomplishing the FIG. 9 sequences are as follows. First, the smoothing equation is ignored and the cursor jumps to the new video position designated by his finger for a new touch panel activation resulting from his initial application of his finger to the faceplate. This direct cursor jump results from the forcing of the new initial cursor position to be set equal to the new initial finger positions with zero velocities resulting in zero velocity and gain/acceleration compensation calculations in the FIG. 9 sequence. Second, the cursor follows his finger movements, directly and smoothly whether he moves his finger slowly or rapidly across the faceplate. This direct cursor following of the finger results from selecting gain G and damping K constants such that the velocity and gain/acceleration compensation calculations correspond with the finger position and movement data. For example, if the operator moves his finger rapidly, the distance between the old position and the new position, the velocity of the change from the old position to the new position and the acceleration from the the old position to the new position are all greater than they would be for slower movement, with the result that the cursor moves more linearly with finger position and movement of this type. Finally, these same gain and damping constants are also selected such that, for the range of very slow and very small finger movements, such as when the finger is effectively nudging the cursor a very slight distance, the velocity and gain/acceleration compensation calculations are very nonlinear with finger movement, with the cursor indirectly moving very, very slowly and very, very small distances, but in the same direction as the person designates a precise display location. Thus, it is possible to nudge the cursor 50 a distance of one picture element even though the beam spacing is, for example, 10 to 15 times the dimension of a picture element.

Incidentally, in passing, it may be noted that the shift register 74 in FIG. 7 indicates schematically that new velocity and position data are entered through bus 75 toward the top of the shift register and that during successive scan intervals, the information is shifted downwardly so that at each level, older position and velocity data is available. The bus 75 also permits the withdrawal of information from any desired recent past period of time, for example, from the next prior scan or from a scan at three or four scans previous. Access to any desired stage of the shift register for the entry or withdrawal of information is conventionally accomplished through suitably addressed gates associated with each shift register stage. Data from the previous scan may be employed in certain of the calculations in order to obtain velocity data; and position data from a scan which took place three or four scans previously is employed in the implementation of the CALL SENT OUT ACTIVATE block 116 (FIG. 8) involving the elimination of transient errors as a person removes his finger from the faceplate.

Concerning another point relative to block 124 of FIG. 9, the position data is provided with offset information in order to accommodate for the fact that the person pointing toward a particular position on the faceplate normally has his finger offset slightly below the point to which he wishes the cursor to be located to provide a full view of the desired video position and the cursor. Accordingly, a slight offset is provided for the X finger position, but not for the horizontal or Y finger position location.

It may also be noted that, in cases where the input touch panel does not overlie the display, no offset would be needed. Thus, as mentioned above, if an input touch panel were available at an operator's desk, with a display out of reach but in view, the operator could see the displayed cursor location when his finger is at the predetermined location on the input touch panel and provide operator feedback in watching the cursor move to the precise desired point by moving the finger on the local input panel. It may also be noted in passing that the display could be in the form of a plasma panel, a liquid crystal display, or arrays of light emitting diodes or other display techniques, instead of a catahode ray tube.

As one further point, it has been noted that the cursor 50 is positioned as a calculated function of input location data, pointer or finger velocity data, and an acceleration factor, in determining the new cursor position. As an alternative to the use of mathematical formulae and performing the calculations, a look-up table may be provided which would give values for changes in the position of the cursor depending on the changes in sensed input positions during successive scan intervals.

In conclusion, it is to be understood that the foregoing description and the embodiments shown in the drawing merely represent one mode of implementation of the touch panel display system of the present invention. Other variations may be devised to accomplish the same function, through the use of the other sequence steps, or other logic hardware. As mentioned above, instead of an array of light beams, other types of touch panel inputs, such as switches or capacitive elements on a transparent and/or flexible plate over the display or remote from the display, may be employed. In addition, although described in connection with a cathode ray tube as the display technology, the present system is also applicable to other forms of displays which have been proposed heretofore or which are currently under development.

## Claims

1. A position designation system using a touch panel input, comprising means for providing a display (22), touch panel input means (24) corresponding generally to the face of the display, means (24, 46, 48) for periodically scanning said touch panel input means to obtain position data during successive scan intervals of time based upon the location of a pointer on the face plate, and characterised by means (26) for compensating for touch initiation dynamics by delaying any changes in the position of the cursor until the location of the pointer on the touch panel array has been scanned for a predetermined plurality of scan intervals.

2. A position designation system according to claim 1, further comprising means (26) for eliminating cursor location termination transients by locating the cursor at the precise calculated position on said display based on at least one touch panel scan earlier than the final touch panel scan before the termination of touch panel pointer input indications, whereby the angular removal of the pointer will avoid an erroneous cursor position on the display.

3. A position designation system according to claim 1 or 2, wherein the touch panel input means (24) has a positional accuracy which is relatively coarse as compared with the predetermined positional accuracy of said display, and the system further comprises means (26) for successively determining new precision cursor locations based on the prior position, the velocity of travel and the distance between the prior position and the new position, and means for positioning the cursor in the precise newly determined position on the display.

4. A system according to claim 1, 2 or 3, wherein said touch panel input means (24) includes an array of light beams which are to be interrupted by a pointer at the position selected.

5. A system according to claim 4, wherein the light beams extend across said display in an intersecting matrix.

6. A system as defined in any preceding claim wherein said touch panel (24) extends across the face of the display (22).

## Patentansprüche

1. Positionsbestimmungssystem, bei dem ein Berührungseingabefeld eingesetzt wird und das eine Einrichtung zum Bereitstellen einer Anzeige (22), eine Berührungsfeld-Eingabeeinrichtung (24), die im wesentlichen der Oberfläche der Anzeige entspricht, eine Einrichtung (24, 46, 48) zum periodischen Abtasten der Berührungsfeld-Eingabeeinrichtung zur Erzielung von Positionsdaten während aufeinanderfolgender Abtastzeitintervalle auf der Grundlage der Position eines Zeigers auf der Oberflächenplatte aufweist, und durch eine Einrichtung (26) zum Kompensieren von dynamischen Erscheinungen beim Beginn der Berührung durch Verzögerung jeglicher Änderungen der Position des Cursors solange, bis die Position des Zeigers auf der Berührungsfeldanordnung für eine vorbestimmte Mehrzahl von Abtastintervallen abgetastet wurde, gekennzeichnet ist.

2. Positionsbestimmungssystem nach Anspruch 1, das weiterhin eine Einrichtung (26) zum Eliminieren von Cursorpositions-Beendigungsübergangseffekten durch Positionieren des Cursors an der genauen berechneten Position auf der Anzeige, basierend auf zumindest einer Berührungsfeld-Abtastung vor der letzten Berührungsfeld-Abtastung vor Beendigung von Berührungsfeld-Zeiger-Eingabenanzeigen aufweist, wodurch die Winkelbeseitigung des Zeigers eine fehlerhafte Cursorposition auf der Anzeige vermeidet.

3. Positionsbestimmungssystem nach Anspruch 1 oder 2, bei dem die Berührungsfeld-Eingabeeinrichtung (24) eine Positionsgenauigkeit besitzt, die relativ grob verglichen mit der vorbestimmten Positionsgenauigkeit der Anzeige ist, wobei das System weiterhin eine Einrichtung (26) zum aufeinanderfolgenden Bestimmen neuer Cursor-Präzisionspositionen auf der Grundlage der früheren Position, der Wandergeschwindigkeit und des Abstands zwischen der vorhergehenden Position und der neuen Position, sowie eine Einrichtung zum Positionieren des Cursors in der exakten, neu bestimmten Position auf der Anzeige aufweist.

4. System nach Anspruch 1, 2 oder 3, bei dem die Berührungsfeld-Eingabeeinrichtung (24) eine Anordnung von Lichtstrahlen aufweist, die durch einen Zeiger an der gewählten Position zu unterbrechen sind.

5. System nach Anspruch 4, bei dem sich die Lichtstrahlen über die Anzeige in einer sich schneidenden Matrix erstrecken.

6. System nach einem der vorhergehenden Ansprüche, bei dem sich das Berührungsfeld (24) entlang der Oberfläche der Anzeige (22) erstreckt.

**Revendications**

1. Un système de désignation de position utilisant une entrée par panneau tactile, comprenant des moyens pour définir une visualisation (22), des moyens d'entrée par panneau tactile (24) correspondant de façon générale à l'écran de la visualisation, des moyens (24, 46, 48) pour balayer périodiquement les moyens d'entrée par panneau tactile, pour obtenir des données de position pendant des intervalles de temps de balayage successifs, sur la base de la position d'un moyen de pointage sur l'écran, et caractérisé par des moyens (26) pour compenser des caractéristiques dynamiques du début du toucher, en retardant tout changement dans la position du curseur jusqu'à ce que la position du moyen de pointage sur le réseau de panneau tactile ait été balayée pendant un ensemble prédéterminé d'intervalles de balayage.

2. Un système de désignation de position selon la revendication 1, comprenant en outre des moyens (26) pour éliminer des transitoires de fin de positionnement du curseur en positionnant le curseur à la position calculée précise sur la visualisation, en se basant sur au moins un balayage du panneau tactile antérieur au balayage final du panneau tactile avant la terminaison d'indications d'entrée du moyen de pointage du panneau tactile, grâce à quoi l'enlèvement oblique du moyen de pointage ne fera pas apparaître une position erronée du curseur sur la visualisation.

3. Un système de désignation de position selon la revendication 1 ou 2, dans lequel les moyens d'entrée par panneau tactile (24) ont une précision de position qui est relativement grossière en comparaison avec la précision de positionnement prédéterminée de la visualisation, et le système comprend en outre des moyens (26) destinés à déterminer successivement de nouvelles positions précises du curseur sur la base de la position antérieure, de la vitesse de déplacement et de la distance entre la position antérieure et la nouvelle position, et des moyens pour positionner le curseur à la position précise nouvellement déterminée sur la visualisation.

4. Un système selon la revendication 1, 2 ou 3, dans lequel les moyens d'entrée par panneau tactile (24) comprennent un réseau de faisceaux lumineux qui sont interrompus par un moyen de pointage à la position sélectionnée.

5. Un système selon la revendication 4, dans lequel les faisceaux lumineux s'étendent sur la visualisation avec une configuration en grille.

6. Un système défini dans l'une quelconque des revendications précédentes, dans lequel le panneau tactile (24) s'étend sur l'écran de la visualisation (22).

EP 0 316 972 B1

*Fig. 1.*

*Fig. 3.*

*Fig. 2.*

TOUCH PANEL (COARSE)

DISPLAY

TOUCH PANEL DATA PROCESSOR

DISPLAY PROCESSOR

BACKGROUND DISPLAY DATA SOURCE

10

ADDRESS

DATA

56

60

58

USER
OPTIONS

62

42

52

41

52

44

43

54

54

46

48

46

48

**Fig. 5.**

46

46

42

46

48

41

50

43

46

48

48

44

48

EP 0 316 972 B1

**Fig. 4.**

*Fig. 6.*

TOUCH
PANELS

*Fig. 7.*

CURSOR
POSITION,
VELOCITY
SHIFT
REGISTER

FROM
TOUCH
PANELS

INCREMENT
RESET
ACTIVE
COUNTER

INCREMENT
RESET
DE-ACTIVE
COUNTER

Fig. 8.

TP - EXEC ⟵ 84

TP DATA ADDR = TP DATA Ø ⟵ 86

88 ⟶ CALL TP-SEARCH

90 ⟶ TP ACTIVE ?

TP ACTIVE ? ⟶ YES ⟶ 92 ⟶ ACTIVE Ø ≥ ACTIVE INIT. CNT. ?

ACTIVE Ø ≥ ACTIVE INIT. CNT. ? ⟶ YES ⟶ CALL (TP-SMOOTH) ⟵ 102

NO ⟶ 108 ⟶ INCR (DE-ACTIVE Ø)

INCR (ACTIVE Ø) ⟵ 98  (NO)

110 ⟶ ACTIVE Ø = Ø

CALL UPDATE = OUTPUT BUFFER ⟵ 104

DE-ACTIVE Ø = DE-ACTIVE FIN CNT ⟵ 112

116 ⟶ CALL SENT OUT ACTIVATE (YES)

DE-ACTIVATED Ø = Ø ⟵ 106

NO

TP DATA ADDR = TP DATA I ⟵ 114

EP 0 316 972 B1

Fig. 9.

**XF** = X FINGER POSITION
**YF** = Y FINGER POSITION
    WITH OFFSET

**XP OLD** = PREVIOUS CURSOR POSITION

**D** = BEAM SPACING

**TEMP** = TEMPORARY STORAGE
**A** = VARIABLE "A"
**G** = GAIN CONSTANT

**XV** = X DIRECTION VELOCITY
**ΔT** = TIME INTERVAL
**K** = DAMPING CONSTANT

**YP OLD** = PREVIOUS CURSOR POSITION

**YV** = Y DIRECTION VELOCITY